# EUROPÄISCHE PATENTANMELDUNG

(11) **EP 4 414 112 A1**
(43) Veröffentlichungstag der Anmeldung: **14.08.2024**
(21) Anmeldenummer: 23155605.1
(22) Anmeldetag: 08.02.2023
(51) Int. Cl.: B23D 57/00, B23D 59/04, B28D 7/02

(54) **SCHUTZVORRICHTUNG FÜR EINE SEILSÄGE UND SEILSÄGE**

(71) Anmelder: Hilti Aktiengesellschaft, 9494 Schaan (LI)
(72) Erfinder: Rieger, Hans-Joerg, 6712 Thueringen (AT); Plattner, David, 6200 Gallzein (AT)
(74) Vertreter: Hilti Aktiengesellschaft Corporate Intellectual Property

(57) **Zusammenfassung**

Die vorliegende Erfindung betrifft eine Schutzvorrichtung (10) für eine Seilsäge (50), wobei die Seilsäge (50) einen Seilantrieb (52) für ein Sägeseil (62) umfasst, wobei die Schutzvorrichtung (10) mindestens zwei teleskopartig zusammenschiebbare Abdeckelemente (12, 14) aufweist, die einen sich entlang einer Seilachse erstreckenden Innenraum (16) zur Aufnahme des Sägeseils (62) bilden. Die Schutzvorrichtung (10) weist mindestens einen Anschluss (18) zum Einbringen eines Kühlmittels in den Innenraum der Schutzvorrichtung (10) auf, wobei es sich bei dem Kühlmittel um eine Kühlflüssigkeit, wie Wasser, oder um einen Luftstrom zum Kühlen, handeln kann. In einem zweiten Aspekt betrifft die Erfindung eine Seilsäge (50) mit einer vorgeschlagenen Schutzvorrichtung (10), wobei die Schutzvorrichtung (10) zwischen einer ersten Führungsvorrichtung (56) für das Sägeseil (62) und einer zweiten Führungsvorrichtung (58) für das Sägeseil (62) befestigt werden kann.

## Beschreibung

Die vorliegende Erfindung betrifft eine Schutzvorrichtung für eine Seilsäge, wobei die Seilsäge einen Seilantrieb für ein Sägeseil umfasst, wobei die Schutzvorrichtung mindestens zwei teleskopartig zusammenschiebbare Abdeckelemente aufweist, die einen sich entlang einer Längsachse erstreckenden Innenraum zur Aufnahme des Sägeseils bilden. Die Schutzvorrichtung weist mindestens einen Anschluss zum Einbringen eines Kühlmittels in den Innenraum der Schutzvorrichtung auf, wobei es sich bei dem Kühlmittel um eine Kühlflüssigkeit, wie Wasser, oder um einen Luftstrom zum Kühlen, handeln kann. In einem zweiten Aspekt betrifft die Erfindung eine Seilsäge mit einer vorgeschlagenen Schutzvorrichtung, wobei die die Schutzvorrichtung zwischen einer ersten Führungsvorrichtung für das Sägeseil und einer zweiten Führungsvorrichtung für das Sägeseil befestigt werden kann.

### Hintergrund der Erfindung:

Im Stand der Technik sind sogenannte Seilsägen bekannt, mit denen große Schnitte, beispielsweise in Wände, eingebracht werden können. Seilsägen verfügen üblicherweise über ein als Endlos-Sägeseil ausgebildetes Sägeseil, das im Inneren der Seilsäge über verschiedene Rollen geführt und gespannt wird. Zumindest ein Teil dieser Rollen bilden einen Seilspeicher, in dem das Sägeseil gespeichert werden kann. Die Rollen bzw. Umlenkrollen des Seilspeichers der Seilsäge weisen Führungsnuten als Laufrillen auf, wobei das Sägeseil in diesen Laufrillen geführt werden kann. Der Seilantrieb, sowie der Seilspeicher können von einem Gehäuse umgeben sein, wobei dadurch eine Antriebs- und Speichereinheit der Seilsäge gebildet wird.

Seilsägen können zum Nass- oder Trockensägen verwendet werden. Vor allem beim Trockensägen kann die Kühlung des Sägeseils eine Herausforderung darstellen und es kann erforderlich sein, einen Sägevorgang zu unterbrechen, um das Sägeseil zu kühlen. Alternativ kann der Sägevorgang mit einer reduzierten Leistung durchgeführt oder fortgesetzt werden, um eine Überhitzung des Sägeseils zu vermeiden.

Bei konventionellen Seilsägen aus dem Stand der Technik sind Kühlvorrichtungen bekannt, mit denen das Sägeseil der Seilsäge gekühlt werden soll. Beispielsweise sind Kühlvorrichtungen bekannt, bei denen das Sägeseil mit Druckluft, einem Wassersprühnebel gekühlt wird. Nachteilig an diesen bekannten Kühlvorrichtungen ist es, dass diese Kühlvorrichtungen in der Regel in der Seilsäge integriert vorliegen. Dadurch geraten die Seilsägen häufig sehr groß und unhandlich und die Seilsägen mit integrierter Kühlvorrichtung für das Sägeseil weisen ein großes Volumen auf. In manchen Fällen wird durch die Integration der Kühlvorrichtung in der Seilsäge die Vorsehung zusätzlicher. Umlenkrollen oder Führungsvorrichtungen erforderlich, so dass die Seilsäge dadurch noch größer und unhandlicher wird.

Bei außerhalb der Säge angebrachten Kühlvorrichtungen besteht bei konventioneller Bauart der Nachteil, dass das Sägeseil über zusätzlich erforderliche Seilführungen zu diesen gelenkt und von dort weggelenkt werden muss. Es können also nicht die ohnehin benötigten Seilführungen zur Befestigung der Kühleinrichtung verwendet werden.

Im Stand der Technik sind ferner Schutzvorrichtungen für das Sägeseil einer Seilsäge bekannt. Eine solche Schutzvorrichtung wird beispielsweise in der DE 10 2007 000 330 A1 beschrieben.

Die Aufgabe, die der vorliegenden Erfindung somit zugrunde liegt, besteht darin, die vorstehend beschriebenen Mängel und Nachteile des Standes der Technik zu überwinden eine Seilsäge bereitzustellen, die kompakt und benutzerfreundlich ausgebildet ist und bei der das Sägeseil optimal gekühlt und das Umfeld der Seilsäge vor dem Sägeseil geschützt werden kann. Insofern besteht ein weiteres Anliegen der Erfindung darin, eine Schutzvorrichtung für eine Seilsäge anzugeben, die die Erreichung der oben genannten Ziele unterstützt.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Schutzvorrichtung für eine Seilsäge vorgesehen, wobei die Seilsäge einen Seilantrieb für ein Sägeseil umfasst, wobei die Schutzvorrichtung mindestens zwei teleskopartig zusammenschiebbare Abdeckelemente aufweist, die einen sich entlang einer Längsachse erstreckenden Innenraum zur Aufnahme des Sägeseils bilden. Die Schutzvorrichtung weist mindestens einen Anschluss zum Einbringen eines Kühlmittels in den Innenraum der Schutzvorrichtung auf, wobei es sich bei dem Kühlmittel um eine Kühlflüssigkeit, wie Wasser, oder um einen Luftstrom zum Kühlen, handeln kann. Zusätzlich kann die Schutzvorrichtung eine Einrichtung zum Trockenen des Sägeseils, zum Beispiel durch Abblasen oder Abbürsten des Sägeseils, umfassen. Darüber hinaus kann die Schutzvorrichtung einen Anschluss zum Abführen des gesammelten Restwassers umfassen, wobei es im Sinne der Erfindung bevorzugt ist, das Restwasser zu reinigen und wiederzuverwenden.

Die Schutzvorrichtung liegt vorzugsweise nicht in der Seilsäge integriert vor, so dass die Seilsäge kompakt ausgebildet sein kann und dadurch eine komfortable Handhabung ermöglicht. Es hat sich gezeigt, dass die Schutzvorrichtung einen wirksamen Schutz des Umfelds der Seilsäge vor dem Sägeseil bietet. Mit anderen Worten kann mit der Schutzvorrichtung die Umgebung der Seilsäge, beispielsweise Personen oder Gegenstände, die sich in räumlicher Nähe zu der Seilsäge aufhalten, vor dem Sägeseil geschützt werden. Darüber hinaus können die Abdeckelemente der Schutzvorrichtung dazu beitragen, das Sägeseil abzuschirmen und den Nutzer oder eine Umgebung der Seilsäge vor den Folgen eines möglichen Seilrisses zu schützen. Es ist im Sinne der Erfindung ganz besonders bevorzugt, die Schutzvorrichtung zum Kühlen des Sägeseils vor allem bei Trockenanwendungen, d.h. beim Trockensägen, zu verwenden. Aufgrund der Kühlfunktion der vorgeschlagenen Schutzvorrichtung kann die Schutzvorrichtung im Sinne der Erfindung bevorzugt auch als «Kühlvorrichtung» oder «Seilkühlung» bezeichnet werden.

Es ist im Sinne der Erfindung bevorzugt, dass die teleskopartig zusammenschiebbaren Abdeckelemente als erstes und zweiten Abdeckelement bezeichnet werden, wobei das erste Abdeckelement als Außenrohr und das zweite Abdeckelement als Innenrohr ausgebildet sein kann. Das bedeutet im Sinne der Erfindung bevorzugt, dass das erste Abdeckelement vorzugsweise einen etwas größeren Innendurchmesser aufweist als der Außendurchmesser des zweiten Abdeckelements. Dadurch kann das bevorzugt als Innenrohr ausgebildete zweite Abdeckelement teleskopartig in das bevorzugt als Außenrohr ausgebildete erste Abdeckelement hineingeschoben werden. Durch die zweite Abdeckelemente wird ein Innenraum der Schutzvorrichtung gebildet, in dem das Sägeseil verlaufen kann. Der Innenraum erstreckt sich dabei entlang einer Längsachse der Schutzvorrichtung und folgt vorzugsweise dem Verlauf des Sägeseils. Die vorgeschlagene Schutzvorrichtung weist mindestens zwei ineinander steckbare Abdeckelemente auf. Selbstverständlich kann die Schutzvorrichtung aber auch mehr als zwei Abdeckelemente aufweisen, die dann ebenfalls ineinandergeschoben werden können, um ein teleskopartiges Kühlrohr für das Sägeseil zu bilden. Dank der teleskopartigen Ausbildung des Kühlungsrohres kann eine Länge der Schutzvorrichtung variiert bzw. eingestellt werden. Mit anderen Worten kann die Länge der Schutzvorrichtung dadurch verändert werden, wie tief das bevorzugt als Innenrohr ausgebildete zweite Abdeckelement in das bevorzugt als Außenrohr ausgebildete erste Abdeckelement hineingeschoben wird. Je weiter das zweite Abdeckelement in das erste Abdeckelement hineingeschoben wird, desto kürzer wird die Schutzvorrichtung, welches vorzugsweise von dem Innen- und dem Außenrohr gebildet wird.

Die Schutzvorrichtung weist zumindest einen Anschluss zum Einbringen eines Kühlmittels in den Innenraum der Schutzvorrichtung auf. Darüber hinaus kann die Schutzvorrichtungen Ventile aufweisen, um die Menge an eingebrachtem Kühlmittel zu regulieren und/oder einzustellen. Das Kühlmittel ist vorzugsweise fluidartig, wobei das Kühlmittel insbesondere von einer Kühlflüssigkeit, wie Wasser, oder von einem gasartigen Kühlmittel, wie einem Luftstrom, gebildet werden kann. Wenn Flüssigkeit als Kühlmittel verwendet wird, ist es im Sinne der Erfindung bevorzugt, von einem flüssigen Kühlmittel zu sprechen. Wenn eine Kühlflüssigkeit als Kühlmittel verwendet wird, kann der Anschluss zum Einbringen des Kühlmittels beispielsweise als Wasseranschluss ausgebildet sein. Wenn eine Kühlluftstrom als Kühlmittel verwendet wird, kann der Anschluss zum Einbringen des Kühlmittels beispielsweise als Luft- oder Gasanschluss ausgebildet sein. Es kann im Sinne der Erfindung auch bevorzugt sein, dass das Kühlmittel von einem Sprühnebel, d.h. von einem Flüssigkeits-Gas-Gemisch, gebildet wird. Das Flüssigkeits-Gas-Gemisch kann insbesondere von einer Mischung aus Kühlwasser und Kühlluftstrom gebildet werden.

Zur Kühlung des Sägeseils können beispielsweise auch Wassernebeldüsen oder Kaltluftdüsenverwendet werden. Durch die Wassernebeldüse kann ein Luft-Wasser-Nebel im Innenraum der Schutzvorrichtung auf das Sägeseil eingebracht werden.

Alternativ oder zusätzlich können Kaltluftdüsen zur Kühlung der eingeblasenen Luft verwendet werden, so dass bei der Kühlung der Luft unter Umständen auf den Zusatz von Wasser verzichtet werden kann. Mit dem Begriff Kaltluftdüsen werden im Kontext der vorliegenden Erfindung insbesondere solche Düsen bezeichnet, bei denen ein Fluid, meist Luft, zunächst komprimiert wird, bevor das Fluid anschließend durch Expansion gekühlt wird. Beispielsweise sind die im Kontext der vorliegenden Erfindung zu verwendenden Düsen dazu eingerichtet, das Fluid auf - 50 °C abzukühlen, wobei die Zieltemperatur je nach Druck einstellbar ist. Als Kaltluftdüsen können im Kontext der vorliegenden Erfindung beispielsweise Vortexdüsen oder Wirbeldüsen eingesetzt werden.

Bei der Verwendung eines flüssigen Kühlmittels, wie Wasser, ist es vorteilhaft, wenn die Schutz-Kühlvorrichtung eine Einrichtung zum Trocken und Ableiten des gesammelten Restwasser umfasst. Das Trocknen des Sägeseils kann beispielsweise durch Abblasen oder Abbürsten der am Sägeseil anhaftenden Restflüssigkeit erfolgen. Zum Abblasen des Restwassers kann Pressluft verwendet werden.

Bei der Verwendung von flüssigem Kühlmittel ist es darüber hinaus vorteilhaft, wenn die Schutz-Kühlvorrichtung zumindest über einen Anschluss zum Ableiten bzw. Absaugen von gesammeltem Kühlwasser und/oder Sprühnebel aus dem Innenraum der Schutz- Kühlvorrichtung verfügt. Dieser Anschluss liegt vorteilhafterweise auf der Seite, an welcher das Seil aus der Schutz-Kühlvorrichtung austritt.

Es ist im Sinne der Erfindung bevorzugt, dass die Schutzvorrichtung zumindest einen Anschluss zum Ableiten oder Absaugen von Kühlmittel und oder Sprühnebel aus dem Innenraum der Schutzvorrichtung aufweist. Das Kühlmittel kann beispielsweise Kühlwasser sein, das mit einem Wasseranschluss in den Innenraum der Schutzvorrichtung eingebracht wird. Es kann sich bei dem Kühlwasser auch um das zunächst tröpfchenartig vorliegende Kühlwasser handeln, welches zuvor den Sprühnebel gebildet hatte. Beide Arten von Kühlwasser können vorzugsweise mit Hilfe des Absauganschluss aus dem Innenraum der Schutzvorrichtung abgesaugt bzw. abgeleitet werden.

Es ist im Sinne der Erfindung bevorzugt, dass der Absauganschluss drehbar an der Schutzvorrichtung angeordnet vorliegt. In einer ganz bevorzugten Ausgestaltung der Erfindung kann der Absauganschluss bzw. der Absaugstutzen um 360 ° oder um im Wesentlichen 360 ° drehbar ausgebildet sein. Der Absauganschluss bzw. der Absaugstutzen kann insbesondere drehbar in Bezug auf die Kühlvorrichtung bzw. auf das Schutzrohr ausgebildet sein. Durch die Drehbarkeit des Absauganschlusses kann vorteilhaferweise sichergestellt werden, dass sich der Absauganschluss immer an der richtigen Position für das abrinnende Kühlwasser befindet. Vorzugsweise liegt der Absauganschluss bzw. der Absaugstutzen an dem Schutzrohr bzw. der Schutzvorrichtung angeordnet vor.

Mit der Erfindung kann vorteilhafterweise erreicht werden, das Sägeseil in der Schutzvorrichtung zu kühlen bzw. abzureinigen.

Es ist im Sinne der Erfindung bevorzugt, dass die Schutzvorrichtung eine Vorrichtung zum Rückführen und/oder zur Wiederverwendung des Kühlwassers aufweist. Auf diese Weise kann das einmal als Kühlwasser verwendete Wasser wiederverwendet werden, so dass vorteilhafterweise ein Wasserkreislauf etabliert werden kann. Durch die Vorsehung einer Vorrichtung zum Rückführen und/oder zur Wiederverwendung des Kühlwassers kann das Erfordernis, der Schutzvorrichtung von außen frisches Wasser zuzuführen, auf ein Minimum reduziert werden. Dadurch kann eine besonders ressourcenschonend arbeitende Schutzvorrichtung bereitgestellt werden. Es ist im Sinne der Erfindung ganz besonders bevorzugt, dass das frühere Kühlwasser vor seiner nächsten Verwendung gereinigt wird, um eine unerwünschte Kontaminationsverschleppung zu verhindern. Dazu kann die Schutzvorrichtung bzw. ihre Vorrichtung zum Rückführen und/oder zur Wiederverwendung des Kühlwassers eine Reinigungseinheit für das Kühlwasser umfassen, so dass eine Kühlwasser-Reinigungsfunktion in dem Wasserkreislauf der Schutzvorrichtung bereitgestellt werden kann. Die Schutzvorrichtung kann insbesondere eine Einrichtung zum Sammeln des entfernten Restwassers aufweisen, sowie eine Vorrichtung, um das gesammelte Restwasser in den Kühlvorgang zurückzuführen.

Es ist im Sinne der Erfindung bevorzugt, dass dem Kühlwasser und/oder dem Luft-Wasser-Nebel ein zusätzliches Kühladditive beigemischt wird. Durch die Beimischung eines zusätzlichen, bevorzugt chemischen Kühladditivs kann die Kühlwirkung des Kühlmittels erhöht werden, ohne dass sich der technisch-physikalische Aufwand für die Kühlung des Sägeseils erhöht.

Es ist im Sinne der Erfindung bevorzugt, dass die Schutzvorrichtung mindestens einen Temperatursensor zur Ermittlung von Temperaturdaten aufweist. Mit dem Temperatursensor kann beispielsweise eine Temperatur des Sägeseils ermittelt werden. Die mit dem Temperatursensor ermittelten Daten werden im Sinne der Erfindung als «Temperaturdaten» bezeichnet. Vorzugsweise können die Temperaturdaten, die mit dem Temperatursensor ermittelt werden, an eine Steuervorrichtung der Seilsäge übermittelbar sein, wobei die Steuervorrichtung dazu eingerichtet ist, einen Sägeprozess der Seilsäge und/oder einen Kühl- und Trockenvorgang des Sägeseils zu steuern. Mit anderen Worten kann der Sägeprozess der Seilsäge basierend auf den Temperaturdaten, die mit dem Temperatursensor ermittelt werden, gesteuert werden. Wenn beispielsweise eine zu hohe Temperatur am Sägeseil der Seilsäge ermittelt wird, kann der Sägevorgang unterbrochen werden. Alternativ kann eine Menge an Kühlwasser, das über den Wasseranschluss oder über die Wassernebeldüse in den Innenraum der Schutzvorrichtung eingebracht wird, erhöht werden, um eine bessere oder schnellere Kühlung des Sägeseils zu erreichen und die Temperatur des Sägeseils zu senken. Die Einstellung der Menge an Kühlwasser stellt vorzugsweise ein Beispiel für eine Steuerung des Kühl- und Trockenvorgang des Sägeseils dar. Darüber hinaus kann auch eingestellt werden, ob dem Kühlmittel ein zusätzliches Kühladditiv beigemischt ist, sowie die Menge eines solchen Kühladditivs. Ferner kann auch davon abgesehen werden, Kühlwasser zu verwenden, so dass die Kühlung des Sägeseils alleine mit einem Kühl-Luftstrom erfolgt. Dieser Kühl-Luftstrom kann über den Luftanschluss, Luftdüsen und/oder Luftbohrungen in den Innenraum eingebracht werden. Die mittels eines Sensors erfassten Temperaturdaten können alternativ an einer Steuereinrichtung angezeigt werden. Dazu kann die Steuereinrichtung ein Anzeigemittel, wie ein Display, einen Monitor, einen Bildschirm und/oder einen Touchscreen, umfassen, ohne darauf beschränkt zu sein. Darüber hinaus können die erforderlichen Eingriffe, welche eine Überhitzung des Sägeseils vermeiden, manuell vorgenommen werden.

Es ist im Sinne der Erfindung bevorzugt, dass die Steuervorrichtung in der Seilsäge integriert oder in einem externen Bedienvorrichtung integriert vorliegt. Bei der externen Bedienvorrichtung kann es sich beispielsweise um eine Fernbedienung oder dergleichen handeln. Diese kann beispielsweise in einen Steh- oder Bedienpult integriert vorliegen. Wenn die Steuervorrichtung in der Seilsäge integriert vorliegt, kann die Steuervorrichtung beispielsweise in einem Hauptkörper der Seilsäge angeordnet vorliegen.

Es kann im Sinne der Erfindung auch bevorzugt sein, dass Druckluft verwendet wird, um das Sägeseil zu trocknen. Dazu kann ein Druckluft-Luftstrom in den Innenraum der Schutzvorrichtung eingebracht werden. Der Druckluft kann selbstverständlich eingestellt werden. Insbesondere kann eine Menge an Druckluft, sowie der Druck, mit der die Druckluft aus einer Druckluftquelle entweicht im Kontext der vorliegenden Erfindung eingestellt werden. Ferner kann auch ein mechanisches Abbürsten des Sägeseils vorgesehen sein, um das Sägeseil zu trocknen. Durch die geschützte Atmosphäre und das vergleichsweise kleine Volumen des Innenraumes der Schutzvorrichtung kann mit der Erfindung vorteilhafterweise eine besonders effiziente und wirksame Trocknung des Sägeseils erreicht werden.

In einem weiteren Aspekt betrifft die Erfindung eine Seilsäge mit einer vorgeschlagenen Schutzvorrichtung. Die für die Schutzvorrichtung eingeführten Begriffe, Definitionen und technischen Vorteile gelten für die Seilsäge analog. Es ist im Sinne der Erfindung bevorzugt, dass Seilsäge mindestens zwei Führungsvorrichtungen umfasst, wobei die Schutzvorrichtung zwischen einer ersten Führungsvorrichtung für das Sägeseil und einer zweiten Führungsvorrichtung für das Sägeseil befestigt werden kann. Bei den Führungsvorrichtungen kann es sich vorzugsweise um Führungs- oder Umlenkrollen handeln, über die das Sägeseil der Seilsäge laufen kann. Die Führungsvorrichtungen können im Sinne der Erfindung auch als «Seilführungen» bezeichnet werden. Ein Grundgedanke, der der Erfindung zugrunde liegt, besteht darin, dass die Schutzvorrichtung flexibel zwischen zwei Seilführungen der Seilsäge anzubringen.

Wenn die Seilsäge an einem Arbeitsort aufgebaut wird, um ein Bauteil zu schneiden, ist es im Sinne der Erfindung bevorzugt, dass die Schutzvorrichtungen nach Abschluss der Aufbauarbeiten zwischen zwei Führungsvorrichtungen oder Seilführungsrollen der Seilsäge montiert wird. Durch die teleskopische Längeneinstellung der Abdeckelemente bzw. des Innen- und des Außenrohres, muss beim Aufbau der Seilsäge bzw. bei der Montage der Schutzvorrichtung nicht auf einen exakten Abstand zwischen den Führungsvorrichtungen oder Seilführungsrollen geachtet werden. Mit anderen Worten kann ein Abstand zwischen der ersten Führungsvorrichtung und der zweiten Führungsvorrichtung einstellbar ausgebildet sein bzw. der Abstand zwischen den Führungsvorrichtungen oder Seilführungsrollen kann variiert oder eingestellt werden. Diese Einstellbarkeit kann insbesondere durch die Teleskopierbarkeit der Abdeckelemente erreicht werden. Dadurch kann der Aufbau der Seilsäge bzw. die Montage der Schutzvorrichtung besonders schnell erfolgen. Vorteilhaft ist es auch, wenn die Seilsäge Halterungen umfasst, mit denen die Schutzvorrichtung an den Führungsvorrichtungen oder Seilführungsrollen angebracht werden können. Vorzugsweise können diese Halterungen drehbar ausgebildet sein, um den Aufbau der Seilsäge bzw. die Montage der Schutzvorrichtung zu erleichtern und kleinere Abweichungen von einer lagegenauen Positionierung der Führungsvorrichtungen und/oder Seilführungsrollen auszugleichen.

Es ist im Sinne der Erfindung bevorzugt, dass die Führungsvorrichtung gleiche oder unterschiedliche Rollendurchmesser aufweisen. Vorzugsweise kann eine Montagemöglichkeit der Schutzeinrichtung auf unterschiedliche Rollendurchmesser erweitert werden. Beispielsweise können Führungsrollen oder -vorrichtungen mit unterschiedlichen Rollendurchmessern verwendet werden. Dadurch kann vorteilhafterweise die Auswahl an verwendbaren Führungsrollen oder -vorrichtungen vergrößert werden. Es kann aber im Sinne der Erfindung auch bevorzugt sein, dass die Führungsvorrichtungen Rollen mit im Wesentlichen gleichen Durchmessern aufweisen.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausgestaltung der vorgeschlagenen Seilsäge mit Schutzvorrichtung
- Fig. 2: Ansicht einer bevorzugten Ausgestaltung der vorgeschlagenen Schutzvorrichtung
- Fig. 3: Detailansicht der zweiten Führungsvorrichtung und ihrer drehbaren Halterung an der Schutzvorrichtung
- Fig. 4, 5: Unterschiedlichen Anbringungsmöglichkeiten einer bevorzugten Ausgestaltung der Schutzvorrichtung

### Ausführungsbeispiele und Figurenbeschreibung:

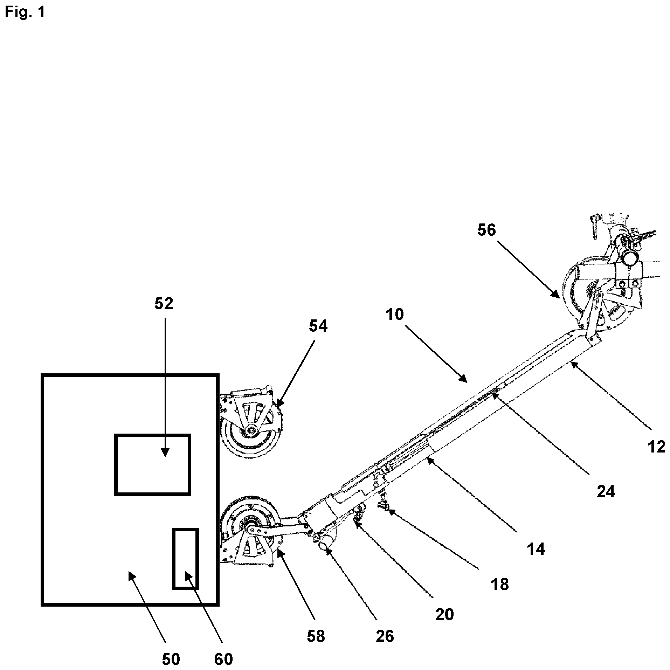

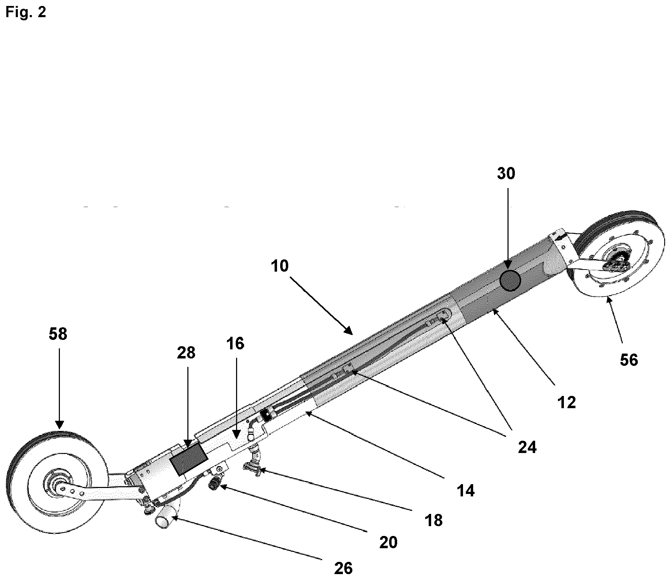

Figur 1 zeigt eine bevorzugte Ausgestaltung der vorgeschlagenen Seilsäge 50. Die Seilsäge 50 umfasst einen Seilantrieb 52 und einen Seilspeicher (nicht dargestellt), wobei der Seilspeicher Rollen und/oder Umlenkrollen 54, 56, 58 umfassen kann. Neben dem Seilantrieb 52 kann die Seilsäge 50 eine Steuervorrichtung 60 umfassen, wobei die Steuervorrichtung 60 in anderen Ausgestaltungen der Erfindung auch Bestandteil einer externen Bedienvorrichtung (nicht dargestellt) sein kann. An der Seilsäge 50 kann eine Schutzvorrichtung 10 angeordnet vorliegen, wobei die Schutzvorrichtung 10 vorzugsweise zwischen einer ersten Führungsvorrichtung 56 und einer zweiten Führungsvorrichtung 58 der Seilsäge 50 angeordnet vorliegt. Die Führungsvorrichtungen 54, 56, 58 können vorzugsweise von Führungs- oder Umlenkrollen gebildet werden. Die Schutzvorrichtung 10 umfasst zumindest zwei Abdeckelemente 12, 14, die zusammen ein teleskopierbares Kühlrohr bilden. Die Länge des teleskopierbares Kühlrohrs kann vorzugsweise an einen Abstand der ersten Führungsvorrichtung 56 und der zweiten Führungsvorrichtung 58 angepasst werden. Dies gilt analog für eine Länge der Schutzvorrichtung 10. Das erste Abdeckelement 12 kann vorzugsweise als Außenrohr des teleskopierbaren Kühlrohres ausgebildet sein, während das zweite Abdeckelement 14 vorzugsweise als Innenrohr des teleskopierbaren Kühlrohres ausgebildet sein kann. Das Innenrohr 14 weist vorzugsweise einen Außendurchmesser auf, der kleiner ist als der Innendurchmesser des Außenrohres 12. Dadurch kann das Innenrohr 14 in das Außenrohr 12 eingeführt werden, so dass ein Innenraum 16 gebildet wird (vgl. Figur 2). Eine Länge bzw. ein Volumen dieses Innenraums 16 der Schutzvorrichtung 10 hängen vorzugsweise davon ab, wie stark die Abdeckelemente 12, 14 ineinandergeschoben werden. Je tiefer das zweite Abdeckelement 14 in dem ersten Abdeckelement 12 eingeführt vorliegt, desto kürzer ist die Schutzvorrichtung 10 bzw. ihr teleskopierbares Kühlrohr. Es ist im Sinne der Erfindung bevorzugt, dass das Innenrohr 14 an einer Befestigung drehbar ausgebildet ist, um die Absaugposition optimal positionieren zu können.

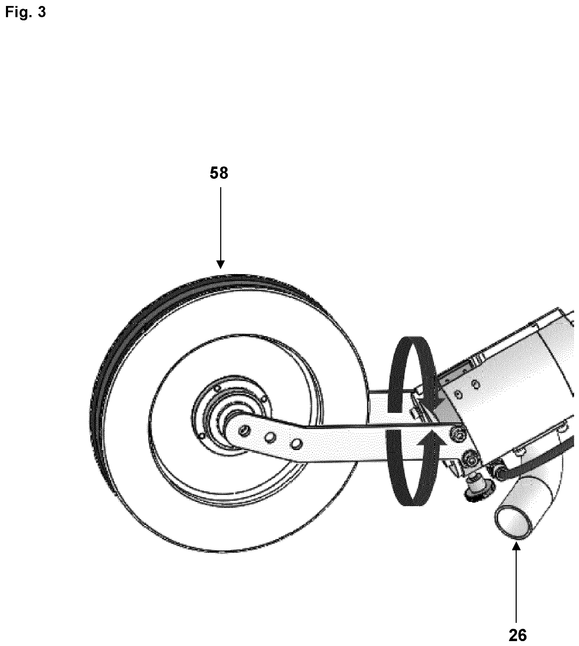

Die Schutzvorrichtung 10 kann einen Wasseranschluss 18 und/oder einen Luftanschluss 20 aufweisen, wobei der Wasseranschluss 18 dazu ausgebildet ist, Kühlwasser in den Innenraum 16 der Schutzvorrichtung 10 einzubringen, während der Luftanschluss dafür ausgebildet ist, einen Kühl-Luftstrom oder Druckluft in den Innenraum 16 der Schutzvorrichtung 10 einzubringen. Der Luftanschluss 20 kann vorzugsweise auch zum Abblasen des Sägeseils 62 verwendet werden. Darüber hinaus kann die Schutzvorrichtung 10 einen Absauganschluss 26 aufweisen, mit dem Kühlwasser aus dem Innenraum 16 der Schutzvorrichtung 10 abgesaugt und dadurch entfernt werden kann. Der Absauganschluss 26 kann drehbar ausgebildet sein, um eine Absaugposition optimal einstellen zu können. Die Drehbarkeit des Absauganschlusses 26 wird in Figur 3 dargestellt.

Figur 2 zeigt eine bevorzugte Ausgestaltung der vorgeschlagenen Schutzvorrichtung 10. Die Schutzvorrichtung 10 kann darüber hinaus eine Vorrichtung 28 zum Rückführen und/oder zur Wiederverwendung des Kühlwassers aufweisen. Mit der Vorrichtung 28 zum Rückführen und/oder zur Wiederverwendung des Kühlwassers kann ein im Wesentlichen geschlossener Wasserkreislauf für die Schutzvorrichtung 10 geschaffen werden, in dem das Kühlwasser regelmäßig gereinigt und wiederverwendet werden kann.

Die Schutzvorrichtung 10 kann darüber hinaus einen Temperatursensor 30 aufweisen. Mit dem Temperatursensor 30 kann eine Temperatur des Sägeseils 62 oder/und eine Temperatur im Innenraum 16 des Kühlrohrs ermittelt werden. Die mit dem Temperatursensor 30 ermittelten Daten werden im Sinne der Erfindung bevorzugt als «Temperaturdaten» bezeichnet, wobei die Temperaturdaten an eine Anzeige- und/oder Steuervorrichtung 60 übermittelt werden können. Die Übermittlung der Temperaturdaten von dem Temperatursensor 30 an die Anzeige- und/oder Steuervorrichtung 60 kann kabelgebunden oder kabellos erfolgen; mithin kann eine Kommunikationsverbindung zwischen dem Temperatursensor 30 und der Anzeige- und/oder Steuervorrichtung 60 gebildet werden, um die Temperaturdaten zu übertragen. Die Anzeige- und/oder Steuervorrichtung 60 ist vorzugsweise dazu ausgebildet, die Temperaturdaten auszuwerten und die Seilsäge 50 und/oder Vorgänge in der Schutzvorrichtung 10 basierend auf dem Temperaturdaten zu regeln und/oder zu steuern. Beispielweise kann die Seilsäge 50 bei zu hohen Temperaturen des Sägeseils 62 oder bei zu hohen Temperaturen im Innenraum 16 der Schutzvorrichtung 10 ausgestellt werden, bis die Temperaturen einen unteren Grenzwert erreichen bzw. unterschreiten. Darüber können auch Parameter, wie Druck, Menge und Art von verwendeten Kühlmitteln und/oder -additiven, basierend auf den mit dem Temperatursensor 30 ermittelten Temperaturdaten geregelt und/oder gesteuert werden. Beispielsweise kann die Anzeige- und/oder Steuervorrichtung 60 dazu ausgebildet sein, dass das Sägeseil 62 nur mit einem «trockenen» Kühl-Luftstrom gekühlt wird und/oder dass das Sägeseil 62 mit einem feuchten Wasser-LuftGemisch in der Form eines Sprühnebels gekühlt wird. Darüber hinaus kann die Anzeige- und/oder Steuervorrichtung 60 bewirken, dass dem Kühlmittel zusätzliche Kühladditive hinzugefügt oder beigemischt werden, um die Kühlwirkung zu verbessern. Eine solche Beimischung von Kühladditiven ist insbesondere dann bevorzugt, wenn das Kühlmittel ein flüssiges Kühlmittel, wie Kühlwasser, ist.

Figur 3 zeigt eine Detailansicht der zweiten Führungsvorrichtung 58 und ihrer drehbaren Halterung an der Schutzvorrichtung 10. Darüber hinaus zeigt Figur 3 den Absauganschluss 26, der drehbar ausgebildet sein kann. Die Drehbarkeit ist in Figur 3 durch die gebogenen Pfeile angedeutet. Zwischen dem unteren gebogenen Pfeil und dem Wasseranschluss 26 ist eine Klemmschraube angeordnet, mit der die Schutzvorrichtung 10 an der Seilsäge 50 im Bereich der zweiten Führungsvorrichtung 58 angebracht werden kann. Die Schutzvorrichtung 10 kann vorzugsweise auch als Kühl-Schutzvorrichtung 10 oder als Schutzrohr bezeichnet werden, wobei die Schutzvorrichtung 10 vorzugsweise auch zwischen zwei von der Seilsäge 50 getrennten Führungsrollen angebracht werden kann.

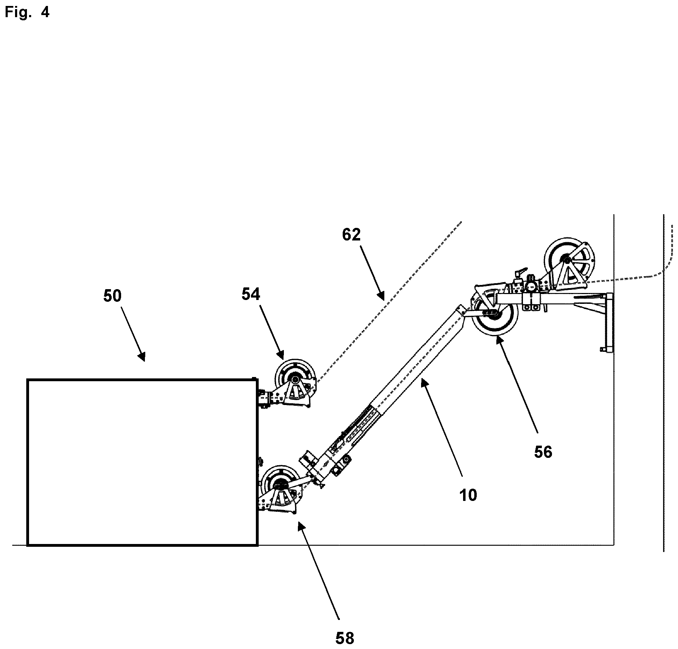

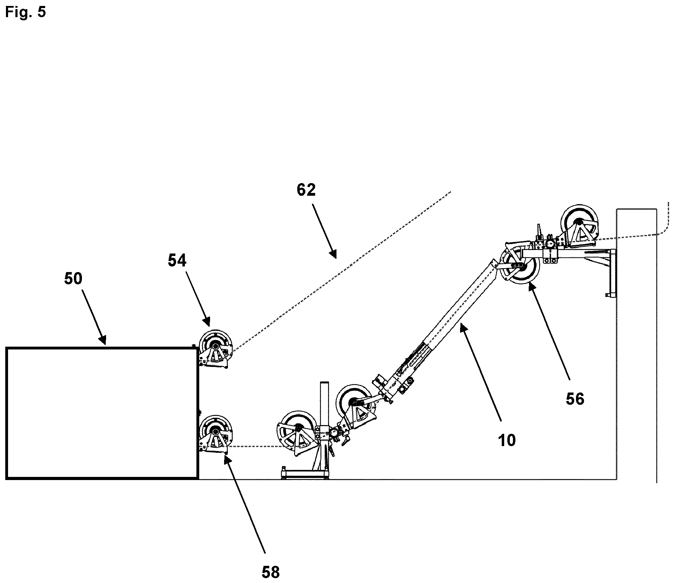

Die Figuren 4 und 5 zeigen unterschiedlichen Anbringungsmöglichkeiten der Schutzvorrichtung 10. In Figur 4 ist eine Anordnung der Schutzvorrichtung 10 zwischen der Seilsäge 50 und der ersten Führungsvorrichtung 56 dargestellt, während in Figur 5 eine Anordnung der Schutzvorrichtung 10 zwischen der ersten Führungsvorrichtung 56 und der zweiten Führungsvorrichtung 58 dargestellt ist. Darüber hinaus zeigen die Figuren 4 und 5 einen möglichen Verlauf des Sägeseils 62 der Seilsäge 50.

### Bezugszeichenliste:

- 10: Schutzvorrichtung
- 12: erstes Abdeckelement, Außenrohr
- 14: zweites Abdeckelement, Innenrohr
- 16: Innenraum der Schutzvorrichtung
- 18: Wasseranschluss
- 20: Luftanschluss
- 24: Wassernebeldüsen
- 26: Absauganschluss
- 28: Vorrichtung zum Rückführen und/oder zur Wiederverwendung des Kühlwassers
- 30: Temperatursensor
- 50: Seilsäge
- 52: Seilantrieb
- 54: weitere Führungsvorrichtung
- 56: erste Führungsvorrichtung
- 58: zweite Führungsvorrichtung
- 60: Anzeige- und/oder Steuervorrichtung
- 62: Sägeseil

## Patentansprüche

1. Schutzvorrichtung (10) für eine Seilsäge (50), wobei die Seilsäge (50) einen Seilantrieb (52) für ein Sägeseil (62) umfasst, wobei die Schutzvorrichtung (10) mindestens zwei teleskopartig zusammenschiebbare Abdeckelemente (12, 14) aufweist, wobei die Abdeckelemente (12, 14) einen sich entlang einer Längsachse erstreckenden Innenraum (16) zur Aufnahme des Sägeseils (62) bilden,
**dadurch gekennzeichnet, dass**
die Schutzvorrichtung (10) mindestens einen Anschluss (18) zum Einbringen eines Kühlmittels in den Innenraum der Schutzvorrichtung (10) aufweist.

2. Schutzvorrichtung (10) nach Anspruch 1
**dadurch gekennzeichnet, dass**
ein erster Abdeckelement (12) als Außenrohr und das zweite Abdeckelement (14) als Innenrohr ausgebildet ist.

3. Schutzvorrichtung (10) nach Anspruch 1 oder 2
**dadurch gekennzeichnet, dass**
die Schutzvorrichtung (10) mindestens eine Wassernebeldüse (24) zum Einbringen eines Luft-Wasser-Nebels in den Innenraum (16) der Schutzvorrichtung (10) aufweist.

4. Schutzvorrichtung (10) nach einem der vorhergehenden Ansprüche
**dadurch gekennzeichnet, dass**
die Schutzvorrichtung (10) mindestens einen Luftanschluss (20) zum Einbringen eines Luftstroms in den Innenraum (16) der Schutzvorrichtung (10) aufweist.

5. Schutzvorrichtung (10) nach einem der vorhergehenden Ansprüche
**dadurch gekennzeichnet, dass**
die Schutzvorrichtung (10) einen Anschluss (26) zum Absaugen bzw. Ableiten von Kühlwasser aus dem Innenraum (16) der Schutzvorrichtung (10) aufweist.

6. Schutzvorrichtung (10) nach Anspruch 5
**dadurch gekennzeichnet, dass**
der Anschluss (26) drehbar an der Schutzvorrichtung (10) angeordnet vorliegt.

7. Schutzvorrichtung (10) nach Anspruch 5 oder 6
**dadurch gekennzeichnet, dass**
die Schutzvorrichtung (10) eine Vorrichtung (28) zum Ableiten und/oder zur Wiederverwendung von Kühlwasser aufweist.

8. Schutzvorrichtung (10) nach einem der vorhergehenden Ansprüche
**dadurch gekennzeichnet, dass**
die Schutzvorrichtung (10) mindestens einen Temperatursensor (30) zur Ermittlung von Temperaturdaten aufweist.

9. Schutzvorrichtung (10) nach einem der vorhergehenden Ansprüche
**dadurch gekennzeichnet, dass**
die Schutzvorrichtung (10) mindestens eine Kaltluftdüse zum Einbringen eines gekühlten Luftstroms in den Innenraum (16) der Schutzvorrichtung (10) aufweist.

10. Seilsäge (50) mit einer Schutzvorrichtung (10) nach einem der vorhergehenden Ansprüche.

11. Seilsäge (50) nach Anspruch 10
**dadurch gekennzeichnet, dass**
die Schutzvorrichtung (10) zwischen einer ersten Führungsvorrichtung (56) für das Sägeseil (62) und einer zweiten Führungsvorrichtung (58) für das Sägeseil (62) befestigbar ist.

12. Seilsäge (50) nach Anspruch 10 oder 11
**dadurch gekennzeichnet, dass**
ein Abstand zwischen der ersten Führungsvorrichtung (56) und der zweiten Führungsvorrichtung (58) einstellbar ist.

13. Seilsäge (50) nach einem der Ansprüche 10 bis 12
**dadurch gekennzeichnet, dass**
Temperaturdaten, die mit einem Temperatursensor (30) ermittelt werden, an eine Anzeige- und/oder Steuervorrichtung (60) der Seilsäge (50) übermittelbar sind, wobei die Anzeige- und/oder Steuervorrichtung (60) dazu eingerichtet ist, einen Sägeprozess der Seilsäge (50) und/oder einen Kühl- und Trockenvorgang des Sägeseils (62) zu steuern.

14. Seilsäge (50) nach einem der Ansprüche 10 bis 13
**dadurch gekennzeichnet, dass**
die Anzeige- und/oder Steuervorrichtung (60) in der Seilsäge (50) integriert oder in einem externen Bedienvorrichtung integriert vorliegt.

15. Seilsäge (50) nach einem der Ansprüche 11 bis 14
**dadurch gekennzeichnet, dass**
die Führungsvorrichtungen (56, 58) gleiche oder unterschiedliche Rollendurchmesser aufweisen.
